**Europäisches Patentamt**

**European Patent Office**

**Office européen des brevets**

(19)

(11) Veröffentlichungsnummer : **0 029 861**
**B1**

(12) # EUROPÄISCHE PATENTSCHRIFT

(45) Veröffentlichungstag der Patentschrift :
26.09.84

(51) Int. Cl.³ : **A 61 C   1/08**

(21) Anmeldenummer : 79104766.5

(22) Anmeldetag : 29.11.79

(54) **Zahnärztliche Handstückanordnung.**

(43) Veröffentlichungstag der Anmeldung :
**10.06.81 Patentblatt 81/23**

(45) Bekanntmachung des Hinweises auf die Patenterteilung : **26.09.84 Patentblatt 84/39**

(84) Benannte Vertragsstaaten :
**AT CH DE FR GB IT SE**

(56) Entgegenhaltungen :
**DE-B- 1 219 170**
**DE-B- 1 295 129**
**DE-C-   477 286**
**US-A- 3 200 663**

(73) Patentinhaber : **Siemens Aktiengesellschaft**
**Berlin und München Wittelsbacherplatz 2**
**D-8000 München 2 (DE)**

(72) Erfinder : **Rosenstatter, Otto**
**Matzing 105**
**A-5164 Seeham (AT)**
Erfinder : **Straihammer, Reinhard**
**In der Hollerhecke 10**
**D-6141 Einhausen (DE)**

**Beschreibung**

Die Erfindung bezieht sich auf eine zahnärztliche Handstückanordnung mit mehreren Triebwellenabschnitten zur Übertragung der Drehbewegung von einem Antriebsmotor auf eine in einem Kopfgehäuse eines am Antriebsmotor betriebsmäßig abnehmbar gehalterten Winkelhandstückkopfes drehbar gelagerte Aufnahmehülse für ein zahnärztliches Werkzeug, mit einem antriebsseitigen Triebwellenabschnitt, der zwei gleichachsige Triebzahnräder mit unterschiedlicher Zähnezahl aufweist, von denen eines jeweils in Eingriff steht mit dem Triebzahnrad des benachbarten Triebwellenabschnittes.

Aus der DE-A1-12 95 129 ist ein zahnärztliches Winkelhandstück mit einer zweiteiligen Längswelle und einem beide Längswellen miteinander verbindenden Getriebe bekannt, welches, um eine sehr hohe Untersetzung zu bekommen, eine senkrecht zur Längswellenachse orientierte Hilfswelle mit zwei unterschiedlich großen Zahnrädern aufweist. Die Hilfswelle mit den beiden Zahnrädern ist in einem besonderen Getriebeblock gelagert, der im Handstückgehäuse zwischen den beiden Längswellen eingesetzt wird. Mit dieser Anordnung kann lediglich eine Untersetzung erzielt werden.

Bei einem anderen bekannten zahnärztlichen Handstück (DE-B-12 19 170) ist die von einem Antriebsmotor angetriebene Triebachse entlang der Längsachse des Handstückes einmal quergeteilt, so daß zwei Triebwellenabschnitte mit dazwischenliegender Getriebeverzahnung gebildet werden. Die Getriebeverzahnung besteht aus einerseits zwei am Ende des einen Triebwellenabschnittes im wesentlichen in einer Ebene angeordneten gleichachsigen Triebzahnrädern mit untereinander verschiedener Zähnezahl und andererseits einem am Ende des anderen Triebachsenabschnittes angeordneten einzelnen Triebzahnrad. Durch Auswechseln oder Verstellen des vorderen Handstückteils, des Kopfteils, wird eine Über- oder Untersetzung der Antriebsdrehzahl erreicht, wobei mit dem Auswechseln bzw. Verstellen eine Änderung des Über- oder Untersetzungsverhältnisses lediglich in einer Übertragungsrichtung vorgenommen werden kann, also beispielsweise nur von einer Direktübertragung mit dem Übersetzungsverhältnis 1 : 1 auf eine Übersetzung mit einem Übersetzungsverhältnis von beispielsweise 1 : 3 oder von einer Direktübertragung auf eine Untersetzung mit einem Untersetzungsverhältnis von beispielsweise 3 : 1. Im Falle einer Untersetzung befinden sich die beiden gleichachsigen Triebzahnräder am abnehmbaren Kopfteil, im Falle einer Übersetzung am antriebsseitigen Handstückteil.

Um die erwähnten Über- und Untersetzungen zu bekommen, sind bei der bekannten Handstückkonstruktion fertigungsseitig hinsichtlich des Einbaus der Triebwellenabschnitte unterschiedliche Antriebsmotoren und antriebsseitige Handstückteile vorzusehen. Nachdem der Zahnarzt sowohl mit unter- als auch mit übersetzter Antriebsdrehzahl arbeitet, sind demnach gemäß der bekannten Handstückanordnung konstruktiv verschiedene Antriebsmotoren und antriebsseitige Handstückteile festzulegen.

Ein weiterer Nachteil bei einer solchen Handstückanordnung ist, daß die zur Getriebeabstufung erforderlichen Zahnräder den Außendurchmesser allgemein, insbesondere aber bei Winkelstücken im Bereich der Knickstelle, stark vergrößern, ferner, daß (wegen der Umsteckmöglichkeit des Kopfteils) keine Verdrehung des Handstücks gegenüber dem Antriebsteil möglich ist. Der bei den Winkelstücken gegebene und in der Praxis sich als zweckmäßig erweisende Kontraknick von etwa 20° gegenüber der Handstücklängsachse verläuft außerdem zu abrupt, wodurch, insbesondere in Verbindung mit der bereits angesprochenen Verdickung in diesem Bereich, die Handhabbarkeit des Handstücks zu wünschen übrig läßt.

Aus DE-C-477 286 schließlich ist eine Handstückanordnung mit stufenweisem Umschaltgetriebe in Form von Zahnradvorgelegen bekannt. Solche Vorgelegegetriebe führen, wenn man die geforderten relativ hohen Über- und Untersetzungen bekommen will, zu unerwünscht großen Handstückdurchmessern.

Aufgabe der vorliegenden Erfindung ist es, eine verbesserte und vereinfachte Handstückanordnung der eingangs genannten Gattung zu schaffen, insbesondere mit dem Ziel, unter Beibehaltung der bei solchen Handstückanordnungen heute üblichen, relativ großen Über- bzw. Untersetzungen durch Gestaltungsmaßnahmen des im Kopfteil verlaufenden Triebwellenabschnittes fertigungstechnisch eine Vereinfachung zu bekommen. Durch diese Vereinfachung soll es möglich sein, konstruktiv gleiche Kopfgehäuse verwenden und darin fertigungsseitig wahlweise Getriebeunter- oder -übersetzungen einbauen zu können.

Die gestellte Aufgabe wird bei einer Handstückanordnung der eingangs genannten Art gemäß der Erfindung dadurch gelöst, daß der benachbarte, sich bis zum Kopfgehäuse des Handstückes erstreckende Triebwellenabschnitt zweistufig ausgebildet ist, indem er zwei in einem Schaft des Winkelhandstückkopfes gelagerte, mit ihren Achsen parallel oder unter einem Winkel zueinander verlaufende Triebwellen enthält, die durch eine aus einem außen- und einem innenverzahnten Zahnrad bestehende Getriebeverzahnung miteinander in Eingriff stehen und daß die Triebwellen und deren Zahnräder so aufeinander und auf die benachbarten anderen Zahnräder abgestimmt sind, daß je nach Einbaulage eine Getriebeunter- oder -übersetzung gebildet wird.

Die Lagerung des Triebwellenabschnittes und die Triebzahnräder an den beiden Enden des Triebwellenabschnittes sind vorteilhafterweise entweder so ausgelegt, daß der Triebwellenabschnitt, unter Beibehaltung der Getriebeverzahnung dazwischen, in umgekehrter Reihenfolge seiner Triebzahnräder angeordnet werden kann, so daß die beiden Enden des Triebwellenabschnittes alternativ mit dem einen oder anderen der beiden Triebzahnräder des antriebsseitigen Triebwellenabschnittes in Eingriff bringbar sind, wobei mit der einen Getriebepaarung eine Getriebeübersetzung und mit der anderen Getriebepaarung eine Getriebeuntersetzung gebildet wird, oder, daß der Triebwellenabschnitt, unter Vertauschung der Getriebeverzahnung dazwischen, in umgekehrter Reihenfolge seiner Triebzahnräder angeordnet werden kann, so daß die beiden Enden des Triebwellenabschnittes alternativ mit dem einen oder anderen der Triebzahnräder des antriebsseitigen Triebwellenabschnittes in Eingriff bringbar sind.

Durch die vorgeschlagenen Maßnahmen wird ferner auch der mit den bisherigen Konstruktionen nicht erreichbare Vorteil erzielt, daß bei den üblichen Unter- bzw. Übersetzungsverhältnissen der Außendurchmesser verringert bzw. bei Beibehaltung des Handstückdurchmessers ein wesentlich (ca. 30 %) höherer Unter- oder Übersetzungsgrad erreicht wird. Durch Verwenden von innen- und außenverzahnten Zahnrädern kann der Verzahnungsmodul und damit die Zähnezahl relativ groß angesetzt werden, wodurch die Eingriffstoleranz der Verzahnung insgesamt nicht zu eng wird.

Ein Ausführungsbeispiel der Erfindung wird nachstehend anhand der Figuren näher erläutert.

Es zeigen :

Figur 1 ein zahnärztliches Handstück komplett mit Antriebsteil,

Figur 2 Einzelteile des Handstückes nach Figur 1 in einer Explosionsdarstellung,

Figur 3 einen Längsschnitt durch das Handstück nach Figur 1.

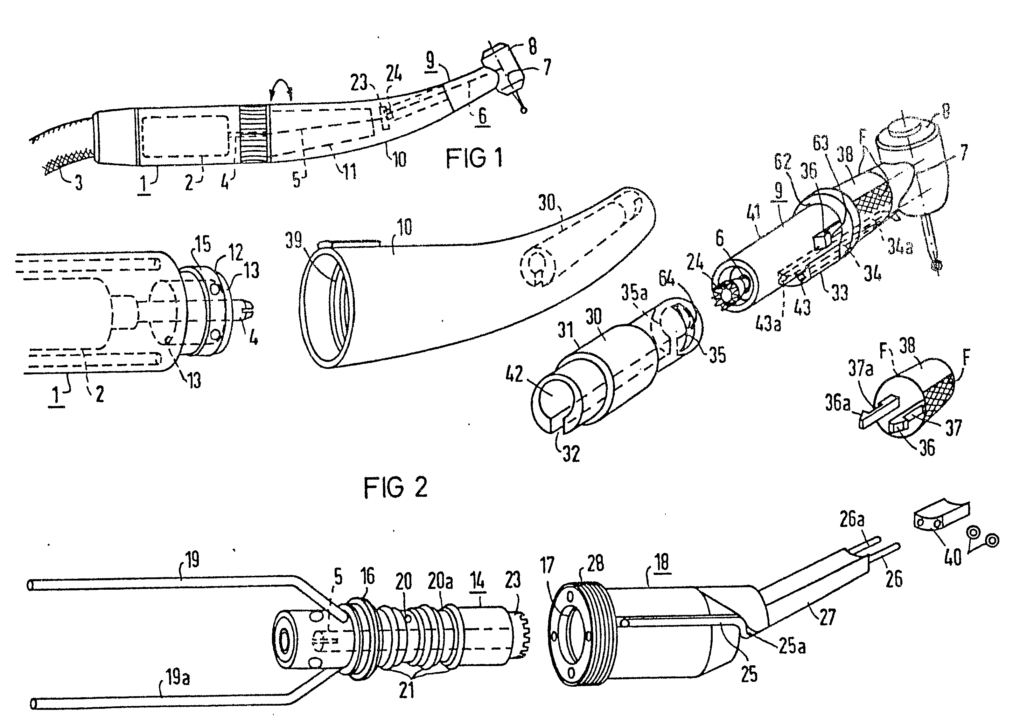

Die Fig. 1 zeigt ein zahnärztliches Handstück mit einem Antriebsteil 1, der einen mit 2 bezeichneten Antriebsmotor (Elektromotor) enthält, dem über einen Versorgungsschlauch 3 Antriebsenergie zugeführt wird. An die Antriebswelle 4 des Elektromotors schließen sich in der Figur schematisch eingezeichnete Triebwellenabschnitte 5, 6, 7 an, über die in bekannter Weise ein in einem Kopfgehäuse 8 des Handstückes drehbar gelagertes, nicht näher bezeichnetes Werkzeug angetrieben wird. Das Kopfgehäuse 8 ist Teil eines mit 9 bezeichneten Kopfteiles, welches die beiden Triebwellenabschnitte 6 und 7 sowie deren Lager aufnimmt und welches abnehmbar an einer Handstückgriffhülse 10 gehaltert ist. Die Handstückgriffhülse 10 umschli eßt eine mit 11 bezeichnete, aus zwei konzentrischen Hülsen bestehende Lagereinheit, die den Triebwellenabschnitt 5 sowie ein Drehlager zur Übertragung einer oder mehrerer Kühlmedien vom Antriebsteil 1 auf das Kopfteil 9 enthält. Die Handstückhülse 10 ist zusammen mit dem Kopfteil 9 und eine später noch näher bezeichnete Hülse der Lagereinheit 11 gegen das Antriebsteil 1 um die Handstücklängsachse drehbar (Pfeil).

Das Antriebsteil 1 enthält (Fig. 2) einen zylindrischen Absatz 12 mit einer in der Darstellung gestrichelt angedeuteten Eindrehung 13, in die im montierten Zustand das eine (in der Figur linke) Ende einer Hülse 14 eingreift. Auf den Absatz 12 ist ferner eine Kugelrastung 15 zur axialen Fixierung der Hülse 14 aufgesetzt. Die Hülse 14 enthält ferner einen in einer Nut eingelegten Federring 16, der im montierten Zustand in eine Ringnut 17 der Hülse 18 eingreift, die zusammen mit der Hülse 14 die Lagereinheit 11 bilden. An der Hülse 14 sind zwei Kühlmittelleitungen 19, 19a befestigt, deren eine Enden in bekannter Weise über radiale Bohrungen in Ringkanäle 20, 20a münden, welche durch Dichtungsringe 21 gegeneinander abgedichtet sind. Die Hülse 14 nimmt ferner noch den Triebwellenabschnitt 5 auf, der der Antriebsseite abgewandt ein Triebzahnrad 23 enthält, das im montiereen Zustand mit einem Zahnrad 24 des Triebwellenabschnittes 6 kämmt. Die an der Hülse 14 vorstehenden Leitungsenden der Leitungsabschnitte 19, 19a greifen im montierten Zustand in nicht näher bezeichnete Längsnuten des Antriebsgehäuses 1 ein und sind mit im Versorgungsschlauch 3 geführten Zuführungsleitungen verbunden.

Die Hülse 18 ist im montierten Zustand konzentrisch zur Hülse 14 angeordnet und enthält Kühlmittelleitungsabschnitte 25, 25a, welche wiederum in bekannter Weise die Kühlmittel aus den Ringkanälen 20, 20a übernehmen. Die Kühlmittelleitungsabschnitte 25, 25a weisen Rohrstutzen 26, 26a auf, welche in einem schräg verlaufenden Fortsatz 27 der Hülse 18 gehaltert sind. Die Hülse 18 enthält ferner einen die Ringnut 17 für das Eingreifen des Federringes 16 enthaltenden Schraubring 28, mit dem die Hülse 18 in der Handstückhülse 10 axial festgelegt werden kann.

Mit 30 ist eine federnde, geschlitzte Führungsbuchse bezeichnet, die mit Vorspannung in der Handstückhülse 10 eingeklemmt ist (siehe strichpunktierte Darstellung). Hierzu enthält die Hülse 10 eine entsprechende Eindrehung, in die ein Bund 31 der Führungsbuchse 30 einshnappt. Die Führungsbuchse 30 ist so in der Handstückhülse 10 gegen axiales Abgleiten gesichert. Die Führungsbuchse 30 ist ferner mit einem durchgehenden Längsschlitz 32 versehen, in den einerseits der Fortsatz 27 der Hülse 18 und andererseits ein längsverlaufender Ansatz 33 des Kopfteils 9 eingreift, der Kühlmittelleitungsabschnitte 34, 34a aufnimmt, die im Bereich des Kopfgehäuses 8 in eine gemeinsame Kühlmittelaustrittsdüse münden.

Die Führungsbuchse 30, die als Verdrehsicherung einerseits des Teils 18 und andererseits des Kopfteils 9 dient, enthält weiterhin zwei beidseitig am Umfang angeordnete Rastschlitze 35, 35a, in die radial federnde Rastnasen 36, 36a eingreifen, wenn das Kopfteil 9 auf der Handstückhülse axial aufgeschoben wird. Die beiden Rastnasen 36, 36a sind mittels achsparallel verlaufender Stege 37, 37a auf einer Federhülse 38 befestigt. Die Federhülse 38 ist sehr dünnwandig ausgebildet und am Kopfteil 9 so angeordnet, daß sie eine äußere Mantelfläche bildet. Bei radialem Druck auf die Hülse 38, z. B. Durch Daumen und Zeigefinger einer Hand, bewegen sich die beiden Rastnasen 36, 36a radial nach innen, wodurch diese mit den Schlitzen 35, 35a außer Eingriff kommen.

Die Stege 37 brauchen nicht unbedingt fest an der Betätigungshülse 38 angeordnet zu sein ; denkbar und im Rahmen der Erfindung ist auch eine Konstruktion, bei der die Stege lediglich kraftschlüssig, z. B. in einer Führungsnut der Hülse eingelegt, mit der Hülse 38 verbunden sind. Auch hinsichtlich der Anzahl der vorgesehenen Rastnasen sind Abweichungen vom dargestellten Ausführungsbeispiel möglich, ohne jedoch den Rahmen der Erfindung zu verlassen. Die Anordnung von zwei diametral einander gegenüberliegenden Rastnasen ist zwar besonders vorteilhaft ; für bestimmte Zwecke ist es jedoch auch denkbar, nur eine Rastnase oder drei bzw. vier Rastnasen vorzusehen.

Im Rahmen der Erfindung liegt auch eine Ausführungsform, bei der die federnde Hülse mit ein oder mehreren Ausnehmungen am Umfang versehen ist und die Stege mit den Rastnasen am anderen Handstückteil angeordnet sind.

Zur Montage des Handstückes wird zunächst die Hülse 30 in der Handstückhülse 10 eingeklemmt. Der Ansatz 31, der in einer entsprechenden Eindrehung der Handstückhülse 10 einrastet, verhindert ein axiales Verstellen der Hülse. Danach wird die Hülse 18 in die Handstückhülse 10 eingeschoben ; der Fortsatz 27 greift dabei in den Längsschlitz 32 der Buchse 30 ein. Mittels des mit einem Außengewinde versehenen Schraubringes 28 wird die Hülse 18 in der Handstückhülse 10 axial fixiert, wozu diese mit einem Innegewinde 39 versehen ist.

Die Hülse 14 ist, wie bereits erwähnt, mittels der Kugelrastvorrichtung 15 am Antriebsteil 1 verdrehsicher und axial nicht betriebsmäßig lösbar befestigt. Die Handstückhülse 10 mit der darin gehalterten Führungsbuchse 30 und der Hülse 18 mit den Kühlmittelleitungen 25, 25a kann nun axial auf die Hülse 14 so weit aufgeschoben werden, bis der Federring 16 in die Nut 17 einrastet und die Handstückhülse somit axial fixiert werden.

Auf die beiden Rohrstutzen 26, 26a wird eine aus ein oder mehreren Elementen bestehende elastische Dichtung 40 aufgeschoben. Die Dichtung ist so ausgebildet, daß sie auf den beiden Rohrstutzen 26, 26a eng anliegt. Das Kopfteil 9 tritt mit einem Schaft oder Halsteil 41 in die Öffnung 42 der Hülse 30 ein. Der Führungsansatz 33, der zur besseren Zentrierung ein sich zum Antriebsteil hin verjüngendes Ende aufweisen kann, greift nach einem bestimmten Einschubweg in die Schlitzführung 32 ein. Das Kopfteil 9 ist so gegen Verdrehung gesichert. Bei weiterem Einführen des Kopfteils 9 in die Handstückhülse 10 kommen schließlich die Leitungskanäle 43, 43a der Kühlmittelleitungsabschnitte 34, 34a in Eingriff mit den Rohrstutzen 26, 26a.

Ein erster Anschlag 62, der die axiale Einfuhrtiefe des Schaftes 41 des Kopfteils 9 begrenzt, kann an geeigneter Stelle vorgesehen sein. Bei Erreichen des Anschlages 62 sind die Rastnasen 36, 36a mit den beiden Rastschlitzen 35, 35a in Eingriff, wodurch das Kopfteil 9 zunächst axial gegenüber der Handstückhülse 10 fixiert ist. Die Dichtung 40 gewährleistet in dieser Raststellung eine dichte Verbindung der Kühlmittelleitungsabschnitte 25, 34.

Die Dichtung 40 hat noch eine weitere Funktion zu erfüllen ; sie soll nämlich für eine in axialer Richtung definierte Eingriffslage der beiden Zahnräder 23, 24 sorgen. Zu diesem Zweck stehen die beiden Rastnasen 36, 36a mit geringem Axialspiel mit den Rastschlitzen 35, 35a in Eingriff. Die Vorspannkraft der Dichtung 40, welche durch das Zusammenkuppeln der Handstückteile erzeugt wird, versucht, das Kopfteil 9 von der Griffhülse 10 wegzudrücken. Dabei ergibt sich eine in axialer Richtung eindeutige Positionierung der Handstückteile durch Anschlag der Kanten 63 der Rastnasen 36, 36a an den Kanten 64 der Rastschlitze 35, 35a. In dieser Position ist selbstverständlich der Anschlag an der Stelle 62 wieder aufgehoben.

Anstelle der elastischen Dichtung 40 kann z. B. auch ein quer zum Schlitz 34 eingelegter Federdraht, ein Federband od. dg., vorgesehen werden, gegen den die Stirnfläche des Führungsansatzes 33 oder Teile davon anliegen. Auch hier sorgt das axial wirkende Druckmittel dafür, daß in gekuppeltem Zustand der Handstückteile eine in axialer Richtung stets definierte, gleichbleibende Eingriffsposition der Triebzahnräder 23, 24 gegeben ist.

Zum Lösen des Kopfteils 9 wird die Federhülse 38 in dem in der Darstellung mit F bezeichneten Flächenbereich, in dem sich die Rastnasen-Schlitzverbindung befindet, radial leicht zusammengedrückt. Durch das Zusammendrücken, das zweckmäßigerweise mit Daumen und Zeigefinger erfolgen kann, verformt sich die Federhülse, wodurch die Rastnasen-Schlitzverbindung 35, 36 außer Eingriff kommt. Die Anordnung der Rastverbindung in dem gezeigten Bereich erlaubt ein gefahrloses An- und Abkuppeln der Handstückteile, weil das Kopfteil praktisch nur an den Seitenflanken, also in dem Flächenbereich, der in das Kopfgehäuse tangierend übergeht, angefaßt zu werden braucht.

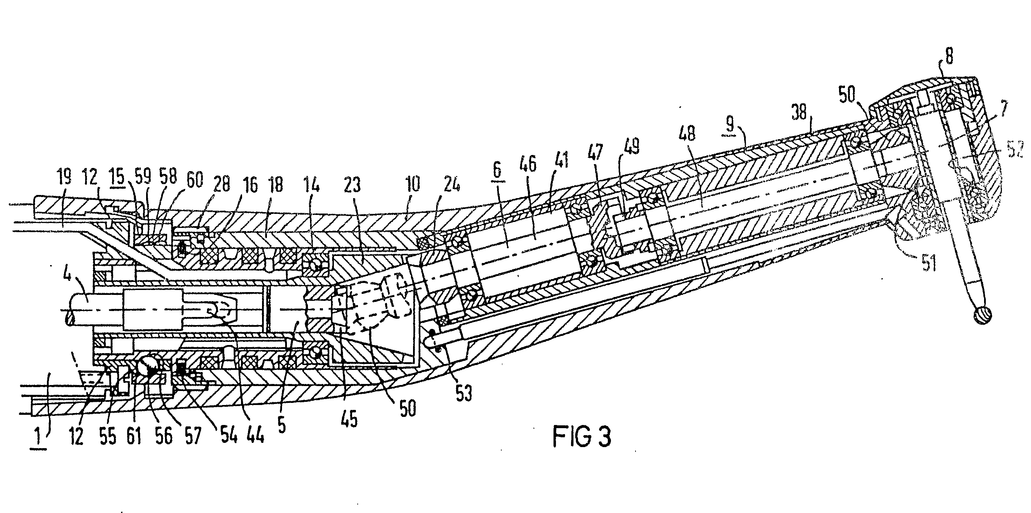

Anhand der Fig. 3, die einen Längsschnitt entlang des komplett montierten Handstückes nach Fig. 1 zeigt, wird der Aufbau und die Anordnung der Triebwellenabschnitte erläutert. Der Triebwellenabschnitt 5, der mittels einer Klauenkupplung 44 direkt mit der Antriebswelle 4 des Motors 2 gekuppelt ist, enthält zwei gleichachsige Triebzahnräder mit unterschiedlicher Zähnezahl, nämlich das als Glockenrad ausgebildete Triebzahnrad 23 und ein im Durchmesser kleineres Kronenrad 45. Der Triebwellenabschnitt 6 des Kopfteils 9 ist zweistufig ausgebildet ; er enthält eine erste Triebwelle 46 mit den Zahnrädern 24 und 47 und achsparallel dazu eine

zweite Triebwelle 48, mit den Zahnrädern 49, 50. Die Zahnradpaarung 47, 49 besteht aus einem innen- und einem außenverzahnten Stirnrad, die zusammen eine Getriebeübersetzung von 1 : 1,5 liefern. Das Zahnrad 50 an dem dem Kopfgehäuse zugewandten Ende der Triebwelle 48 ist als Kegelrad ausgebildet und steht in Eingriff mit einem Zahnrad 51 des Triebwellenabschnittes 7, welcher eine das anzutreibende, in der Darstellung nicht näher bezeichnete Drehwerkzeug aufnehmende Aufnahmehülse 52 trägt.

Die beiden Triebwellen 46 und 48 sind, wie aus Fig. 2 ersichtlich ist, Bestandteil des Kopfteils 9 und im engeren Sinne somit auch Bestandteil des mit 41 bezeichneten Halsteils.

In der mit durchgezogenen Linien gezeichneten Getriebestellung wird die Drehbewegung von der Antriebswelle 4 zunächst auf den Triebwellenabschnitt 5 und von dort über das Glockenrad 23 und das Kronenrad 24 auf die Triebwelle 46 übertragen. In dieser Getriebestufung erfolgt zunächst eine Übersetzung der Motordrehzahl im Verhältnis 1 : 2,1. Mittels der Getriebepaarung 47, 49 wird, wie bereits erwähnt, nochmals eine Getriebeübersetzung im Verhältnis 1 : 1,5 erzielt. Eine weitere, jedoch kleinere Übersetzung im Verhältnis 1 : 1,3 wird im Kopfgehäuse 8 mittels der Zahnradpaarung 50, 51 erzielt. Als Gesamtübersetzung ergibt sich somit ein Übersetzungsverhältnis 1 : 4,1.

Infolge der Aufteilung des Triebwellenabschnittes 6 in die zwei Stufen 46 und 48 ist es möglich, bei gleicher Anordnung der Triebwellenteile auch eine Untersetzung zu bekommen, indem der gesamte Triebwellenabschnitt — unter Beibehaltung der Getriebepaarung 47, 49 — umgekehrt angeordnet wird, die Triebwelle 48 mit dem Triebzahnrad 50 also anschließend an den Triebwellenabschnitt 5 gelagert ist, so daß das Triebzahnrad 50 in Eingriff kommt mit dem Kronenrad 45 des Triebwellenabschnittes 5 (siehe strichpunktierte Darstellung) und das Kronenrad 24 mit dem Triebzahnrad 51 des Triebwellenabschnittes 7 im Kopfgehäuse 8 kämmt. Die Getriebeverbindung 47, 49 bleibt bei dieser umgekehrten Anordnung erhalten, so daß die Drehzahl vom Triebewellenabschnitt 5 mit der Getriebekombination 45, 51 im Verhältnis 1 : 1 an den Triebwellenabschnitt 6 weitergegeben wird. In der Getriebeverbindung zwischen den beiden Stufen 47, 49 wird bei dieser Anordnung sodann eine Untersetzung erzielt.

Die beiden Triebwellen 46, 48 können vorteilhafterweise so ausgebildet und im Kopfteil 9 so angeordnet sein, daß sie komplett mit ihren Lagerungen oder auch einzeln alternativ in der einen oder anderen umgekehrten Anordnung eingebaut werden können. Es kann somit auch eine Getriebepaarung gebildet werden, bei der die Getriebeverzahnung zwischen den beiden Triebwellen 46 und 48 vertauscht ist und die Triebzahnräder in umgekehrter Reihenfolge angeordnet sind, also entweder die Getriebepaarung 23/24 ; 49/47 und 50/51 oder die Getriebepaarung 45/50 ; 47/49 und 24/51. Durch die vorbeschriebene Austauschbarkeit läßt sich die Anzahl der zu fertigenden Triebwellenteile reduzieren.

In der Hülse 10, die den Triebwellenabschnitt 5 und über einen Großteil auch den Triebwellenabschnitt 6 überdeckt, ist die Hülse 18 mittels des Schraubringes 28 axial festgelegt. Hierzu ist sowohl die Hülse 10 als auch die Hülse 18 mit einem als Anschlag dienenden Abschnitt 53 versehen. Der Schraubring 28 enthält eine dem Federring 16 angepaßte Nut, in die dieser (vgl. auch Fig. 1) eingreift. Der Federring 16 ist in einer Nut 54 der Hülse 14 radial federnd eingelegt. Bei axialem Aufschieben der durch den Schraubring 28 fest miteinander verbundenen Hülsen 10 und 18 schnappt der Federring 16 in die Ringnut des Schraubringes 28 ein. Die Griffhülse 10 mit dem an ihr befestigten Kopfteil 9 ist sodann axial gegenüber dem Antriebsteil 1 fixiert. Durch Überwinden eines bestimmten axialen Zuges kann die Griffhülse 10 mit den daran befestigten Teilen von der Hülse 14 wieder abgezogen werden. Mit dem Schraubring 28 läßt sich auch der Eingriff der Zahnradpaarung 23, 24 bzw. 45, 50 einstellen.

Die Hülse 14 ist mittels der Rasteinrichtung 15 an dem mit dem Antriebsgehäuse fest verbundenen Flanschteil 12 abnehmbar befestigt. Die Rasteinrichtung 15 enthält drei am Umfang in Radialbohrungen 55 des Flanschteils 12 eingelegte Kugeln 56, die in Ausnehmungen 57 der Hülse 14 eingreift. Die Kugeln 56 werden durch einen Haltering 58 nach innen, also auf die Ausnehmung 57 hin gedrückt. Der Haltering 58 enthält eine der Kugeloberfläche angepaßte erste Ringnut 59 und eine der Oberfläche des Federringes 16 angepaßte zweite Ringnut 60. Die Ringnut 60 dient zur unverlierbaren Halterung des Halteringes 58 bei abgenommener Hülse 10. Durch axiales Verschieben des Halteringes 58 nach rechts, also zum Kopfteil hin, kann so der Haltering mit der Ringnut 60 über den Federring 16 gelegt werden. In dieser Stellung können sich die Kugeln 56 nach außen bewegen, jedoch nur bis zu einem Anschlag 61, der durch die radiale Führungsnut bzw. Bohrung 55 gegeben ist. Dieser Anschlag ist so bemessen, daß die Hülse 14 axial aus dem Flanschteil 12 herausgezogen werden kann.

In dem aufgezeigten Ausführungsbeispiel liegen die Achsen der Beiden Triebwellen 46 und 48 parallel zueinander. Vorteilhaff kann es auch sein, die Triebwellen so zu lagern, daß sich ihre Achsen unter einem Winkel schneiden ; die Verzahnung ist dann ähnlich der der Triebzahnradpaarung 23/24 auszubilden. Mit einer solchen Lösung kann der gesamte «Kontraknick-Winkel», d. h. der Winkel, der zwischen Motorachse und Achse des letzten Triebwellenabschnittes vor dem Kopfgehäuse gebildet wird, vergrößert werden.

**Ansprüche**

1. Zahnärztliche Handstückanordnung mit mehreren Triebwellenabschnitten (5, 6, 7) zur Übertragung der Drehbewegung von einem Antriebsmotor (2) auf eine in einem Kopfgehäuse (8) eines am Antriebsmotor (2) betriebsmäßig abnehmbar gehaltenen Winkelhandstückkopfes (9) drehbar gelagerte Aufnahmehülse (52) für ein zahnärztliches Werkzeug, mit einem antriebsseitigen Triebwellenabschnitt (4, 5), der zwei gleichachsige Triebzahnräder (23, 45) mit unterschiedlicher Zähnezahl aufweist, von denen eines jeweils in Eingriff steht mit dem Triebzahnrad (24, 50) des benachbarten Triebwellenabschnittes (6), dadurch gekennzeichnet, daß der benachbarte, sich bis zum Kopfgehäuse (8) des Handstückes erstreckende Triebwellenabschnitt (6) zweistufig ausgebildet ist, indem er zwei in einem Schaft (41) des Winkelhandstückkopfes (9) gelagerte, mit ihren Achsen parallel oder unter einem Winkel zueinander verlaufende Triebwellen (46, 48) enthält, die durch eine aus einem außen- und einem innenverzahnten Zahnrad (47, 49) bestehende Getriebeverzahnung (47, 49) miteinander in Eingriff stehen und daß die Triebwellen (46, 48) und deren Zahnräder (47, 49) so aufeinander und auf die benachbarten anderen Zahnräder (23, 51) abgestimmt sind, daß je nach Einbaulage eine Getriebeunter- oder -übersetzung gebildet wird.

2. Zahnärztliche Handstückanordnung nach Anspruch 1, dadurch gekennzeichnet, daß die Lagerung des Triebwellenabschnittes (6) und die Triebzahnräder (24, 50) an den beiden Enden des Triebwellenabschnittes (6) so ausgelegt sind, daß der Triebwellenabschnitt (6), unter Beibehaltung der Getriebeverzahnung (47, 49) dazwischen, in umgekehrter Reihenfolge seiner Triebzahnräder angeordnet werden kann, so daß die beiden Enden des Triebwellenabschnittes (6) alternativ mit dem einen (23) oder anderen (45) der beiden Triebzahnräder (23, 45) des antriebsseitigen Triebwellenabschnittes (5) in Eingriff bringbar sind, wobei mit der einen Getriebepaarung (23, 24 ; 47, 49 ; 50, 51) eine Getriebeübersetzung und mit der anderen Getriebepaarung (45, 50 ; 49, 47 ; 24, 51) eine Getriebeuntersetzung gebildet wird.

3. Zahnärztliche Handstückanordnung nach Anspruch 1, dadurch gekennzeichnet, daß die Lagerung des Triebwellenabschnittes (6) und deren Triebezahnräder so ausgelegt sind, daß der Triebwellenabschnitt (6), unter Vertauschung der Getriebeverzahnung (47, 49) dazwischen, in umgekehrter Reihenfolge seiner Triebzahnräder angeordnet werden kann, so daß die beiden Enden des Triebwellenabschnittes (6) alternativ mit dem einen (23) oder anderen (45) der Triebzahnräder des antriebsseitigen Triebwellenabschnittes (5) in Eingriff bringbar sind.

## Claims

1. A dental handpiece assembly having a plurality of drive shaft sections (5, 6, 7) for the transmission of rotary movement from a drive motor (2) to a receiving sleeve (52) for a dental tool, which is rotatably mounted in a head housing (8) of an angled handpiece head (9) which for operation is detachably secured on the driving motor (2) ; a drive shaft section (4, 5) at the drive end which has two coaxial drive gearwheels (23, 45) which have a different number of teeth and one of which is engaged with the drive gearwheel (24, 50) of the adjacent drive shaft section (6), characterised in that the adjacent drive shaft section (6) which extends to the head housing (8) of the handpiece, is of two-stage design, comprising two drive shafts (46, 48) which are mounted in a shank (41) of the angled handpiece head (9) and run with their axes parallel or at an angle to one another, and which are engaged with one another by a toothed gearing (47, 49) which consists of an externally and an internally toothed gearwheel (47, 49) ; and that the drive shafts (46, 48) and the gearwheels (47, 49) thereof, are matched to one another and to adjacent other gearwheels (23, 51) in such a way that, depending upon the installation position a gear reduction or multiplication is produced.

2. A dental handpiece assembly according to Claim 1, characterised in that the mounting of the drive shaft section (6) and the drive gearwheels (24, 5) at the two ends of the drive shaft section (6) are so arranged that the drive shaft section (6) can be arranged with its drive gearwheels in reverse sequence, the toothed gearing (47, 49) being retained therebetween, so that the two ends of the drive shaft section (6) can be alternatively engaged with one (23) or the other (45) of the two drive gearwheels (23, 45) of the drive shaft section (5) at the drive end, a gear multiplication being produced by means of the one gear combination (23, 24 : 47, 49 ; 50, 51) and a gear reduction being produced by means of the other gear combination (45, 50 : 49, 47 ; 24, 51).

3. A dental handpiece assembly according to Claim 1, characterised in that the mounting of the drive shaft section (6) and the driving gearwheels thereof are so arranged that the drive shaft section (6) can be arranged with its drive gearwheels in reverse sequence, the toothed gearing (47, 49) being interchanged therebetween, so that the two ends of the drive shaft section (6) can be alternatively engaged with one (23) or the other (45) of the drive gearwheels of the drive shaft section (5) at the drive end.

## Revendications

1. Pièce à main de dentisterie comportant plusieurs éléments d'arbres d'entraînement (5, 6, 7) servant à transmettre le mouvement de rotation d'un moteur d'entraînement (2) à un manchon (52) de logement d'un outil de dentisterie, montée de façon à pouvoir tourner dans un carter (8) d'une tête (9) de pièce à main coudée montée, du point de vue fonctionnement, en étant amovible sur un moteur d'entraînement (2), et comportant un élément d'arbre d'entraînement (4, 5) situé du côté entraînement et qui comporte des roues dentées d'entraînement coaxiales (23, 45) comportant des nombres de dents différents et qui sont en prise respectivement avec les roues dentées d'entraînement (24, 50) de l'élément d'arbre d'entraînement voisin (6), caractérisé par le fait que l'élément d'arbre d'entraînement (6) voisin, qui s'étend jusqu'au carter (8) de la tête de la pièce à main, est réalisé en deux étages par le fait qu'il contient deux arbres d'entraînement (46, 48) montés dans un manchon (41) de la tête (9) de la pièce à main coudée et dont les axes sont parallèles ou délimitent un angle entre eux, et qui sont en prise réciproque par l'intermédiaire d'un engrenage de transmission (47, 49) constitué par une roue dentée à denture extérieure (47) et une roue dentée à denture intérieure (49), et que les arbres d'entraînement (46, 48) et leurs roues dentées (47, 49) sont accordés entre eux et avec les autres roues dentées (23, 25) de telle manière que l'on obtient, selon la position du montage, une transmission démultiplicatrice ou une transmission multiplicatrice.

2. Pièce à main de dentisterie suivant la revendication 1, caractérisée par le fait que le montage de la section d'arbre d'entraînement (6) et les roues d'entraînement (24, 50) aux deux extrémités de cet élément d'arbre d'entraînement sont agencées de telle sorte que l'élément d'arbre d'entraînement (6) peut, tout en maintenant l'engrenage de transmission (47, 49), être intercalé avec une disposition inverse de ses roues dentées, de manière que les deux extrémités de l'élément d'arbre d'entraînement (6) peuvent être alternativement mises en prise avec l'une (23) ou l'autre (45) des deux roues dentées d'entraînement (23, 25) de l'élément d'arbre d'entraînement (5), situé du côté entraînement, une transmission multiplicatrice étant formée avec un accouplement des engrenages (23, 24 ; 47, 49 ; 50, 51) et une transmission démultiplicatrice étant formée avec l'autre accouplement des engrenages (45, 50 ; 49, 47 ; 24, 51).

3. Pièce à main de dentisterie suivant la revendication 1, caractérisée par le fait que le montage de la section d'arbre d'entraînement (6) et de ses roues dentées d'entraînement est agencée de telle sorte que la section d'entraînement (6) peut être disposée, moyennant la permutation de l'engrenage de transmission (47, 49) intercalé, selon une succession inverse de ses roues dentées d'entraînement, pour que les deux extrémités de l'élément d'entraînement (6) puissent être amenées en prise en alternance avec l'une (23) ou l'autre (45) des roues dentées d'entraînement de la section d'arbre d'entraînement de l'élément d'arbre d'entraînement (5), située du côté d'entraînement.

FIG 1

FIG 2

FIG 3